## Europäisches Patentamt
## European Patent Office
## Office européen des brevets

(19)

(11) Veröffentlichungsnummer: **0 037 075**
**B1**

(12) **EUROPÄISCHE PATENTSCHRIFT**

(45) Veröffentlichungstag der Patentschrift:
06.03.85

(51) Int. Cl.⁴: **G 01 S 7/36**, G 01 S 7/30

(21) Anmeldenummer: **81102250.8**

(22) Anmeldetag: **25.03.81**

(54) **Puls-Doppler-Radar mit einer CFAR-Schwelle.**

(30) Priorität: **28.03.80 DE 3012036**

(43) Veröffentlichungstag der Anmeldung:
**07.10.81 Patentblatt 81/40**

(45) Bekanntmachung des Hinweises auf die Patenterteilung:
**06.03.85 Patentblatt 85/10**

(84) Benannte Vertragsstaaten:
**BE FR GB IT NL**

(56) Entgegenhaltungen:
**DE - A - 2 520 677**
**DE - A - 2 823 419**
**DE - B - 1 766 173**
**DE - B - 2 548 181**
**GB - A - 1 204 382**

**M.I. SKOLNIK "Introduction to Radar Systems", 2. Auflage, 1980 1962 MC GRAW-HILL KOGAKUSHA, Ltd., Tokyo Seiten 390-398**

(73) Patentinhaber: **Siemens Aktiengesellschaft, Berlin und München Wittelsbacherplatz 2, D-8000 München 2 (DE)**

(72) Erfinder: **Günther, Heinzdieter, Helterwangerstrasse 34, D-8000 München 70 (DE)**
Erfinder: **Siegel, Harald, Ing. grad., Johann-Werner-Strasse 4, D-8035 Gauting (DE)**

## Beschreibung

Die Erfindung bezieht sich auf ein Puls-Doppler-Radargerät mit einer Auswerteschaltung und mit einer CFAR-Schwelle zur Durchführung von ECCM-Maßnahmen.

Um Störer, die die gesamte Empfangsperiode belegen, soweit wie möglich unwirksam zu machen, ist es bekannt, eine sogenannte CFAR-Schwelle zu verwenden (Skolnik, »Introduction to Radar Systems«, 1962, McGraw-Hill Book Comp., Seite 566).

Es ist auch bereits eine Schaltungsanordnung bekannt (DE-A-2 823 419), mittels der die durch intermittierende Störsignale bedingte Falschalarmrate verbessert und die Empfindlichkeit des Empfängers in ungestörten Empfangsbereichen erhalten werden soll. Dazu ist ein Impuls-Längen-Diskriminator vorgesehen, der Bezugswerte von Signalamplituden aufeinanderfolgender Entfernungskanäle bildet. Die Bezugswerte liefern in einer Schwellenschaltung mit zwei vorgegebenen Schwellenwerten ein Kriterium für die jeweilige Signallänge. Überschreitet die Signallänge einen vorgegebenen Wert, dann wird das entsprechende Signal als Störsignal interpretiert.

Der Schwellenwert einer CFAR-Schaltung, der für eine bestimmte Falschalarmrate notwendig ist, ist vom Rauschmittelwert abhängig. Es ist dabei gleichgültig, ob es sich um das Empfängerrauschen oder um einen Rauschstörer handelt. Der Schwellenwert wird unter Anwendung des konstanten Faktors aus dem Rauschmittelwert abgeleitet. Der Rauschmittelwert wird nur aus denjenigen Entfernungstoren abgeleitet, die außerhalb der STC-Dämpfung liegen. Jedoch verfälschen Entfernungskanäle, in die ein Zielecho oder ein gepulster Rauschstörer fällt, die Mittelwertbildung, weil dadurch der Schwellenwert zu höheren Werten hin angehoben wird, so daß kleine Zielechos die Schwelle nicht mehr überschreiten.

Der Erfindung liegt die Aufgabe zugrunde, bei einem Puls-Doppler-Radar der eingangs genannten Art eine durch die Verwendung einer CFAR-Schwelle bedingte Verminderung der Empfindlichkeit des Radargerätes weitgehend zu vermeiden. Gemäß der Erfindung wird diese Aufgabe dadurch gelöst, daß zur Erzeugung eines Schwellenwertes für die Zielentscheidung in der CFAR-Schwelle die Amplitudenwerte der Videosignale am Ausgang der Nachintegrationsschaltung in einen Zwischenspeicher übernommen werden und daß eine Schaltung zur Mittelwertbildung mit einer nachfolgenden Schaltung zur Schwellenwerterzeugung eingangsseitig über einen gesteuerten Schalter zwischen dem Ausgang des Zwischenspeichers und dem Ausgang der Schwellenwertschaltung umschaltbar ist, derart, daß der Umschalter den Eingang der Schaltung zur Mittelwertbildung vor der ersten Mittelwertbildung mit dem Zwischenspeicher und bei Auftreten eines Signals am Ausgang der CFAR-Schwelle mit dem Ausgang der Schwellenwertschaltung zur iterativen Mittelwertbildung verbindet.

In einem derart gebildeten Schwellenwert für die CFAR-Schwelle ist eine Verfälschung des Rauschmittelwertes durch solche Entfernungskanäle, die Zielechos oder gepulste Rauschstörers enthalten, weitgehend vermieden. Damit ergibt sich eine einfachere Realisierung der CFAR-Funktion, wobei außerdem die Einbuße an Empfindlichkeit verringert ist. Die bei bekannten CFAR-Schaltungen erforderliche dynamische Anpassung des Schwellenwertes oder der Verstärkung an die Amplitude des Störers wird hierbei vermieden und durch einen statischen Vorgang ersetzt.

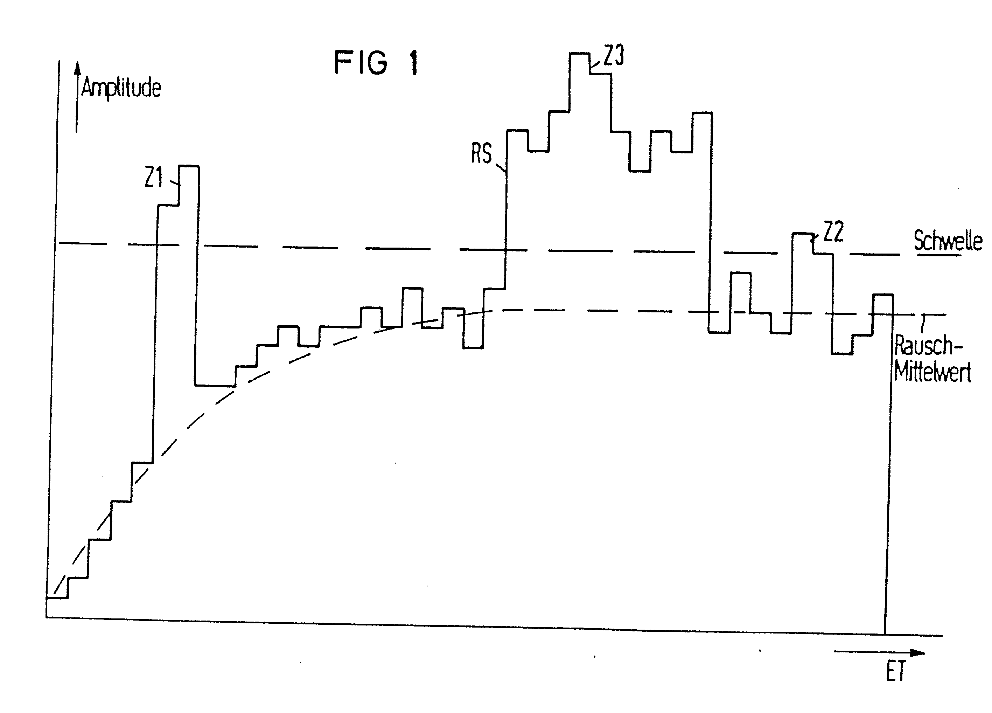

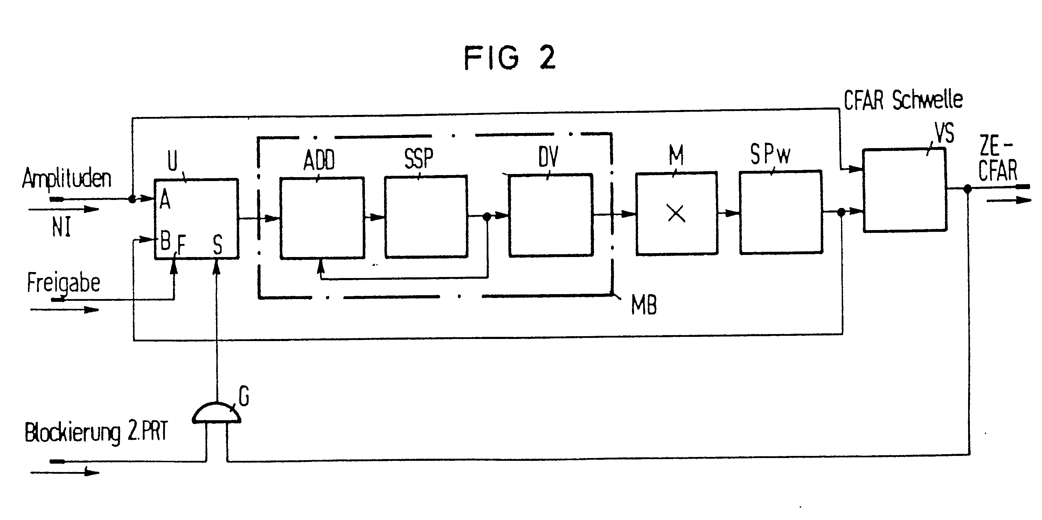

Die Erfindung und weitere Einzelheiten der Erfindung werden anhand der Fig. 1 und 2 näher erläutert. Es zeigt

Fig. 1 ein Beispiel der Signalspannung mit mehreren Zielen und einem gepulsten Rauschstörer einer Empfangsperiode am Integratorausgang,

Fig. 2 ein Prinzipschaltbild zur digitalen Erzeugung einer an das Rauschen angepaßten CFAR-Schwelle.

In Fig. 1 ist die Amplitude der am Ausgang einer Nachintegrationsschaltung erhaltenen Signalspannung einer Empfangsperiode über den Entfernungstoren ET aufgetragen. Der ermittelte Rauschmittelwert und die CFAR-Schwelle sind gestrichelt eingezeichnet. Die Ziele Z1 und Z2 sowie das einem gepulsten Rauschstörer RS überlagerte Ziel Z3 überschreiten die CFAR-Schwelle. Bei einem mit der Schaltung gemäß der Erfindung gewonnenen Schwellenwert ist der Einfluß der Ziele Z1 bis Z3 und des gepulsten Rauschstörers RS vernachlässigbar. Die CFAR-Schwelle entscheidet, welche Signale als Ziel anerkannt werden. In einer weiteren Auswerteschaltung kann danach der gepulste Rauschstörer RS identifiziert und versucht werden, das in ihm eingeschlossene Ziel zu erkennen.

Die CFAR-Schaltung (Fig. 2) erhält die auszuwertenden Signalamplituden aus einem nicht dargestellten Zwischenspeicher (RAM) am Ausgang einer ebenfalls nicht dargestellten Nachintegrationsschaltung. In der Nachintegrationsschaltung kann z. B. eine entfernungsindividuelle Aufsummierung der Echosignale über die Dauer einer Zielüberstreichungszeit in einer Summierschaltung erfolgen. Durch die Aufsummierung der Echosignale entsteht eine sektorielle Integration, die in festen periodischen Abständen neue Amplitudenwerte liefert, die nach der Einspeicherung zwischenzeitlich analysiert werden können. Die CFAR-Schaltung besteht eingangsseitig aus einem Umschalter U, der jeweils während der zweiten Empfangsperiode (PRT) blokkiert ist. An den Umschalter U schließt sich eine Schaltung MB an, die in bekannter Weise mittels eines Addierers ADD und eines ausgangsseitig auf den Addierer zurückgeführten Speichers SSP zur Summenwertbildung in Verbindung mit einem Dividierer DV einen Mittelwert bildet. In Abhängigkeit vom Ausgangssignal eines UND-Gatters G am Steuereingang S des Umschalters U wird der Eingang A während der zweiten Periode (PRT) mit dem Addierer ADD verbunden, sobald ein Eingang des UND-Gatters ein Blocksignal erhält, das auf seinen Ausgang durchgeschaltet wird. In einem der Schaltung MB nachfolgenden Multiplizierer M wird der Rauschmittelwert mit einem konstanten Faktor multipliziert. Das Ergebnis wird zur Erzeugung des Schwellenwertes für die CFAR-Schwelle einem Speicher SPw zugeführt. Der Ausgang des Speichers SPw ist an den Eingang B des Umschalters U geführt, so daß eine aus Umschalter U, Mittelwertbilder MB, Multiplizierer M und Speicher SPw gebildete Rückführschleife entsteht, mittels der durch Iteration ein weitgehend von unerwünschten Signalen gereinigter Rauschmittelwert erhalten wird. Der nach einer Anzahl von n Mittelwertbildungen erhaltene Schwellenwert gelangt an eine als Vergleichsschaltung VS arbeitende CFAR-Schwelle, die durch Vergleich mit den Signalamplituden vom Ausgang des Speichers der Nachintegrationsschaltung die Zielentscheidungen durchführt.

Die Funktion der einzelnen Schaltungsteile der CFAR-Schaltung wird nachfolgend erläutert. In einer ersten Periode nach dem Ende der Integration werden die Amplitudenwerte in den Zwischenspeicher (RAM) eingelesen. In der zweiten Periode ist der Eingang A des Umschalters U an den Addierer durchgeschaltet, so daß von den Amplitudenwerten außerhalb der STC-Dämpfung (Freigabe) ein Mittelwert in der Schaltung MB gebildet werden kann. Der nach dieser ersten Mittelwertbildung vorliegende Mittelwert ist wegen der vorhandenen Ziele Z1 bis Z3 und/oder des gepulsten Rauschstörers RS zu hoch. Entsprechendes gilt für den im Speicher SPw gebildeten Schwellenwert, der an einen Eingang B des Umschalters U zurückgeführt ist. In der dritten Periode wird der am Eingang B anliegende Schwellenwert aus dem Speicher SPw durch einen Steuerbefehl des UND-Gatters G an den Addierer ADD durchgeschaltet und ein neuer Mittelwert errechnet. Jedes am Ausgang der CFAR-Schwelle auftretende Signal (Zielentscheidung) bewirkt während der entsprechenden Entfernungskanäle über das UND-Gatter G die Umschaltung. Als Begrenzerpegel dient der Schwellenwert, der vom letzten Mittelwert im Speicher SPw abgeleitet ist. In dieser Periode werden die Ziel- und Störeramplituden erstmals begrenzt und der Einfluß auf die Mittelwertbildung vermindert. Der neue Mittelwert ist somit bereits kleiner als der vorhergehende.

In der vierten Periode wird der Begrenzerpegel im Speicher SPw aus dem neuen Mittelwert abgeleitet und nach Begrenzung mit dem neuen Schwellenwert ein weiterer Mittelwert gebildet. Dieser Vorgang kann noch mehrmals wiederholt werden. Der Einfluß von Zielechos und gepulstem Rauschstörer wird auf diese Weise schließlich vernachlässigbar klein. Der durch diese iterative Mittelwertbildung nach n Perioden erhaltene optimale Schwellenwert bestimmt dann an der CFAR-Schwelle VS den Vergleich mit den Amplitudenwerten vom Ausgang des Zwischenspeichers. Die weitere Auswertung der am Ausgang der CFAR-Schwelle erhaltenen Signale (Zielentscheidung) kann in bekannter Weise in einer nicht dargestellten weiteren Schaltung erfolgen.

Die Schaltung zur Erzeugung der CFAR-Schwelle kann auch in analoger Schaltungstechnik verwirklicht werden.

## Patentansprüche

1. Puls-Doppler-Radargerät mit einer Auswerteschaltung in der Videolage, die Einrichtung zur Festzeichenunterdrückung und zur Nachintegration aufweist und mit einer CFAR-Schwelle zur Durchführung von ECCM-Maßnahmen, dadurch gekennzeichnet, daß zur Erzeugung eines Schwellenwertes für die Zielentscheidung in der CFAR-Schwelle die Amplitudenwerte der Videosignale am Ausgang der Nachintegrationsschaltung in einen Zwischenspeicher übernommen werden und daß eine Schaltung zur Mittelwertbildung (MB) mit einer nachfolgenden Schaltung zur Schwellenwerterzeugung (M, SPw) eingangsseitig über einen gesteuerten Schalter (U) zwischen dem Ausgang des Zwischenspeichers und dem Ausgang der Schwellenwertschaltung umschaltbar ist, derart, daß der Umschalter (U) den Eingang der Schaltung zur Mittelwertbildung (MB) vor der ersten Mittelwertbildung mit dem Zwischenspeicher und bei Auftreten eines Signals am Ausgang der CFAR-Schwelle (VS) mit dem Ausgang der Schwellenwertschaltung (SPw) zur iterativen Mittelwertbildung verbindet.

2. Puls-Doppler-Radargerät nach Anspruch 1, dadurch gekennzeichnet, daß die Ziel-/Störerentscheidung mit einem nach einer vorgegebenen Anzahl von Mittelwertbildungen erhaltenen Schwellenwert in der Vergleichsschaltung (VS) der CFAR-Schwelle erfolgt.

3. Puls-Doppler-Radargerät nach einem der vorhergehenden Ansprüche, dadurch gekennzeichnet, daß die Anzahl der Mittelwertbildungen von der Pulsfolgefrequenz (PRF) des Radargerätes gesteuert ist.

## Claims

1. A pulse-Doppler-radar device with an analysis circuit in the video position, which has devices for moving target indication and for secondary integration and with a CFAR-threshold for the implementation of ECCM-measures, characterised in that in order to produce a threshold value for the target decision in the CFAR-threshold the amplitude values of the videosignals at the input of the secondary integration circuit are transferred into an intermediate store, and that a circuit for mean value formation (MB) with a following circuit for threshold value generation (M, SPw) can be switched over at its input end, via a controlled switch (U), between the output of the intermediate store and the output of the threshold value circuit, in such manner that the changeover switch (U) connects the input of the mean value formation circuit (MB) to the intermediate store prior to the first mean value formation, and, on the occurrence of a signal at the output of the CFAR-threshold (VS), to the output of the threshold value cicuit (SPw) for iterative mean value formation.

2. A pulse-Doppler-radar as claimed in Claim 1, characterised in that the target/interference-source decision is carried out in the comparison circuit (VS) of the CFAR-threshold with a threshold value which is obtained following a predetermined number of mean value formations.

3. A pulse-Doppler-radar device as claimed in one of the preceding Claims, characterised in that the number of mean value formations is controlled by the pulse repetition frequency (PRF) of the radar device.

**Revendications**

1. Appareil radar Doppler à impulsions comportant un circuit d'évaluation travaillant dans la gamme vidéo et qui possède des dispositifs pour réaliser la suppression d'échos fixes et pour réaliser l'intégration complémentaire, et comportant un dispositif à seuil CFAR pour la mise en œuvre de contre-mesures électroniques, caractérisé par le fait que pour l'obtention d'une valeur de seuil pour la décision concernant les cibles dans le dispositif à seuil CFAR, les valeurs d'amplitude des signaux vidéo sont transférées, à la sortie du circuit d'intégration complémentaire, dans une mémoire intermédiaire et un circuit (MB) servant à former la valeur moyenne, en aval duquel est branché un circuit (M, SPw) servant à produire la valeur de seuil, peut être commuté, du côté entrée, par l'intermédiaire d'un commutateur commandé (U), entre la sortie de la mémoire intermédiaire et la sortie du circuit à valeur de seuil, de telle sorte que le commutateur (U) relie l'entrée du circuit (MB) servant à déterminer la valeur moyenne à la mémoire intermédiaire, avant la première formation de la valeur moyenne, et lors de l'apparition d'un signal à la sortie du dispositif à seuil CFAR (VS), à la sortie du circuit à valeur de seuil (SPw), pour la formation itérative de la valeur moyenne.

2. Appareil radar Doppler à impulsions suivant la revendication 1, caractérisé par le fait que la décision cible/brouilleur est réalisée avec une valeur de seuil, obtenue au bout d'un nombre prédéterminé de formations de la valeur moyenne, dans le circuit comparateur (VS) du dispositif à seuil CFAR.

3. Appareil radar Doppler à impulsions suivant l'une des revendications précédentes, caractérisé par le fait que le nombre des formations de la valeur moyenne est commandé par la fréquence de récurrence des impulsions (PFR) de l'appareil radar.

FIG 1

# FIG 2

Amplituden

NI

Freigabe

Blockierung 2.PRT

U

A

B F    S

ADD    SSP    DV

M

×

SPw

MB

G

CFAR Schwelle

VS

ZE – CFAR

0 037 075